# EUROPEAN PATENT SPECIFICATION

(11) **EP 1 267 589 B1**
(45) Date of publication and mention of the grant of the patent: **27.03.2013**
(21) Application number: 02254010.8
(22) Date of filing: 10.06.2002
(51) Int. Cl.: H04Q 11/00

(54) **Optical node unit, wavelength multiplexing optical transmission system, and wavelength separating method**
Optische Knoteneinheit, optisches Übertragungssystem mit Wellenlängen-Multiplexierung, und Wellenlängen-Trennungsverfahren
Unité de noeud optique, système de transmission optique à multiplexage en longueurs d'ondes, et méthode de séparation de longueurs d'ondes

(30) Priority: 12.06.2001 JP 2001177316
(43) Date of publication of application: 18.12.2002
(73) Proprietor: Kabushiki Kaisha Toshiba, Tokyo 105-8001 (JP)
(72) Inventor: Shibagaki, Taro, Tokyo 105-9001 (JP); Kishino, Fuminori, Tokyo 105-9001 (JP); Miyachi, Masahide, Tokyo 105-9001 (JP)
(74) Representative: Brookes Batchellor LLP

(56) References cited:
- EP-A- 0 849 968
- HARADA K ET AL: "HIERARCHICAL OPTICAL PATH CROSS-CONNECT SYSTEMS FOR LARGE SCALE WDMNETWORKS" OFC/IOOC '99 OPTICAL FIBER COMMUNICATION CONFERENCE / INTERNATIONAL CONFERENCE ON INTEGRATED OPTICS AND OPTICAL FIBER COMMUNICATION. SAN DIEGO, CA, FEB. 21 - 26, 1999, OPTICAL FIBER COMMUNICATION CONFERENCE / INTERNATIONAL CONFERENCE ON INTEGRATED OP, 21 February 1999 (1999-02-21), pages WM55-1, XP000966974 ISBN: 0-7803-5430-3
- GLANCE B ET AL: "APPLICATIONS OF THE INTEGRATED WAVEGUIDE GRATING ROUTER" JOURNAL OF LIGHTWAVE TECHNOLOGY, IEEE SERVICE CENTER, NEW YORK, NY, US, vol. 12, no. 6, 1 June 1994 (1994-06-01), pages 957-962, XP000484211 ISSN: 0733-8724

## Description

This invention relates to a wavelength multiplexing transmission system, an optical node unit used in the system, and a wavelength separating method used in the system.

A recently increasing demand for communication leads to a pressing need to improve the transmission capability of a core network at which communication traffic concentrates. Therefore, optical wavelength multiplexing technology have been attracting attention. The optical wavelength multiplexing technology is for multiplexing optical signals of different wavelengths. The larger the number of optical signals multiplexed, the more traffic it is possible to transmit. Hereinafter, individual optical signals multiplexed to form wavelength-multiplexed light are called wavelength lights.

A wavelength multiplexing optical transmission system comprises a plurality of optical node units (hereinafter, referred to as nodes) that transmit wavelength-multiplexed light and optical cables that connect the nodes. There are three forms of network topology of this type of system: one is to connect a plurality of nodes linearly via optical cables, another is to connect a plurality of nodes in a ring, and the other is to connect a plurality of node in a mesh.

In this type of system, the number of wavelengths needed differs from one node to another. Specifically, it is necessary to allocate more wavelengths to a node provided in an area where communication is in greater demand, whereas fewer wavelengths should be allocated to a node provided in an area where communication is in less demand. In a state where a path is set arbitrarily in a network, the number of wavelengths related to separation/multiplexing (add/drop) might be about at most 50% of the total number of wavelengths at any node.

Such being the case, if the necessary and sufficient number of wavelengths were able to be allocated to the individual nodes according to the needs, this could minimize the scale of nodes and therefore operate the network efficiently. To achieve this, an optical splitting device called a branch unit has been used.

A branch unit is inserted into the middle of optical cables. Splitting some wavelength lights from the wavelength-multiplexed light enables as many wavelengths as needed can be introduced into a node.

There is a possibility that local communication demand will vary. In an area where several wavelengths are sufficient at present, more wavelengths will possibly be needed in the future. As progress is made in technology, the number of wavelengths to be multiplexed is expected to increase more and more. However, the allocation of wavelengths by a branch unit is fixed. For this reason, to change the wavelengths allocated to the nodes or increase the number of wavelengths, it is necessary to replace the branch unit with a suitable one or reinstall a suitable branch unit. This imposes a great burden on the network operator.

Furthermore, to increase the number of wavelengths allocated to the nodes according to a change in the demand, modifications must be made to expand the nodes. To expand the scale of an optical switch in a non-blocking manner, it is necessary to use an optical whitch with a complete matrix configuration or a non-blocking multistage switch. As a result, cross wirings and wires increase in number. Because this is inconvenient in managing the hardware of the nodes, there is a need to avoid the inconvenience by all means.

To expand the system without expanding its hardware, it is necessary to introduce beforehand nodes which leave a latitude in the number of handlable wavelengths. To secure the flexibility of being able to change the allocatable wavelength band, each node must have the ability to handle all of the wavelengths. As is generally known, the scale of an optical switch increases in proportion to the square of the number of wavelengths. Therefore, the scale of a node increases in proportion to the square of the number of wavelengths.

From what has been explained, it is not too much to say that the conventional wavelength multiplexing optical transmission system as e.g. disclosed in "Hierarchical Optical Patch Cross-Connect systems for Large Scale WDM Hetworls" by K. Harada et al. leaves a less latitude in the expansion or the modification of the system. When expansion is taken into account intentionally, a wasteful design cannot be helped because of the scale of a node and the allocation of wavelengths.

The object of the present invention is to provide an optical node unit capable of realizing the expansion or change of a wavelength multiplexing optical transmission system, a wavelength multiplexing optical transmission system using the node unit, and a wavelength separating method used in the system.

According to an aspect of the present invention, there is provided an optical node unit comprising: a first periodic optical device which includes a first port and a plurality of second ports and which, when wavelength-multiplexed light including a plurality of wavelength lights arranged at equal intervals of wavelength is inputted to the first port, allows the individual wavelength lights to appear at any of the plurality of second ports at first cyclic intervals of wavelength; a second periodic optical device which includes a third port and a plurality of fourth ports and which, when wavelength-multiplexed light including a plurality of wavelength lights arranged at equal intervals of wavelength is inputted to the third port, allows the individual wavelength lights to appear at any of the plurality of fourth ports at second cyclic intervals of wavelength different from the first cyclic intervals; a first optical switching section which selectively connects any of the plurality of second ports to the third port; and a second optical switching section which includes a fifth port and connects the fifth port to the plurality of fourth ports in a switching manner.

According to another aspect of the present invention, there is provided a wavelength multiplexing optical transmission system comprising: a plurality of optical node units; and an optical transmission path which connects the node units in an arbitrary combination of them, wherein at least one of the plurality of optical node units includes a first periodic optical device which includes a first port and a plurality of second ports and which, when wavelength-multiplexed light including a plurality of wavelength lights arranged at equal intervals of wavelength is inputted to the first port, allows the individual wavelength lights to appear at any of the plurality of second ports at first cyclic intervals of wavelength; and a second periodic optical device which includes a third port and a plurality of fourth ports and which, when wavelength-multiplexed light including a plurality of wavelength lights arranged at equal intervals of wavelength is inputted to the third port, allows the individual wavelength lights to appear at any of the plurality of fourth ports at second cyclic intervals of wavelength different from the first cyclic intervals.

With these configurations, the individual wavelength lights included in wavelength-multiplexed light are put together by the first periodic optical device into groups. Each of the wavelength groups is outputted at the second port of the first periodic optical device. That is, the wavelengths handled at each node are divided into a plurality of wavelength groups. As a result, a virtual network corresponding to each wavelength group is formed in a real network.

The optical switching section at each node determines which wavelength group to select. This makes it possible to determine freely and easily at each node which wavelength group the present node belongs to.

The wavelength lights included in each wavelength group are separated completely at the second periodic optical device. This is because the cyclic interval of the first periodic optical device differs from the cyclic interval of the second periodic optical device.

As described above, setting done at each node enables wavelength lights allocated to the present node to be set freely. This not only makes it unnecessary to provide a branch unit in the system but also enables the allocation of wavelengths to each node to be changed easily and dynamically.

With the above configurations, the first optical switching section has only to be as large as can select any of a plurality of wavelength groups and the second optical switching section has only to be as large as can select any of the wavelength lights included in the wavelength groups. In this way, although the scale of each optical switching section is minimized, any one of all the wavelength lights included in wavelength-multiplexed light can be selected.

That is, an arbitrary wavelength light can be selected without using as large an optical switch as handles all the wavelength lights. This reduces the scale of the optical switch remarkably, which helps reduce the size of each node.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a system configuration diagram of a first embodiment of a wavelength multiplexing optical transmission system according to the present invention;
FIG. 2 is a block diagram showing the configuration of the main part of the first embodiment of node N1 to node N6 shown in FIG. 1;
FIG. 3 shows the direction in which optical signals are transmitted when periodic optical filters 1, 2 separate an optical signal;
FIG. 4 shows the direction in which optical signals are transmitted when the periodic optical filters 1, 2 multiplex optical signals;
FIG. 5 is a block diagram showing a configuration of the optical switching section 3 shown in FIG. 2;
FIG. 6 is a block diagram showing a configuration of the optical switching section 4 shown in FIG. 2;
FIG. 7 is a diagram to help explain the input/output characteristic of the periodic optical filter 1 shown in FIG. 2;
FIG. 8 is a diagram to help explain the input/output characteristic of the periodic optical filter 2 shown in FIG. 2;
FIGS. 9A to 9C schematically shows a plurality of virtual networks formed in a real network shown in FIG. 1;
FIG. 10 is a block diagram showing the configuration of the main part of a second embodiment of node N1 to node N6 shown in FIG. 1;
FIG. 11 is a block diagram showing the configuration of the main part of a third embodiment of node N1 to node N6 shown in FIG. 1;
FIG. 12 is a block diagram showing a configuration of each of the optical switching sections 71, 73, 73, 74 shown in FIG. 11;
FIG. 13 is a block diagram showing the configuration of the main part of a fourth embodiment of node N1 to node N6 shown in FIG. 1;
FIG. 14 is a schematic system configuration diagram of a fifth embodiment of a wavelength multiplexing optical transmission system according to the present invention;
FIG. 15 is a block diagram showing the configuration of a node used in the system shown in FIG. 14;
FIGS. 16A to 16E schematically shows virtual networks which can be formed on the system shown in FIG. 14;
FIG. 17 schematically shows the flow of optical signals, centering on node N1 in FIGS. 16A to 16D; and
FIG. 18 shows a state where an optical transmission path forming section 100 is set when there are wavelengths to be added and dropped at node N1.

Hereinafter, referring to the accompanying drawings, embodiments of the present invention will be explained in detail.

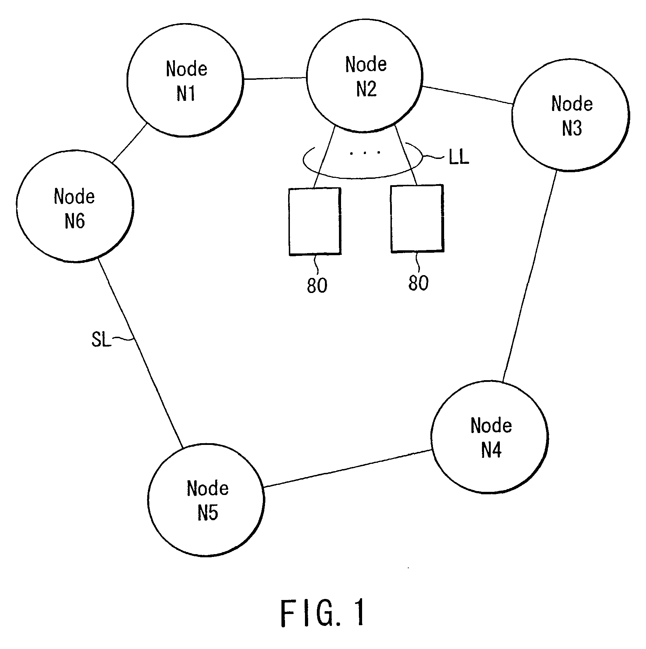

FIG. 1 is a system configuration diagram of an embodiment of a wavelength multiplexing optical transmission system according to the present invention. The system comprises a plurality of node N1 to node N6 and an optical cable SL that connects these node N1 to node N6 in a ring. The optical cable SL includes a plurality of optical fibers (not shown). The number of optical fibers varies according to the form of the system. The forms of the system include, for example, a unidirectional transmission system that uses a single optical fiber and a bidirectional transmission system that uses two optical fibers. The forms of the system further include a 2-fiber system and a 4-fiber system. In the 2-fiber system, common transmission resources are used in the service system and in the protection system. In the 4-fiber system, independent transmission resources are provided in the service system and in the protection system. A low-order-group unit 80, such as a switching system or a terminal unit, is connected via a low-order-group line LL to each node.

### (First Embodiment)

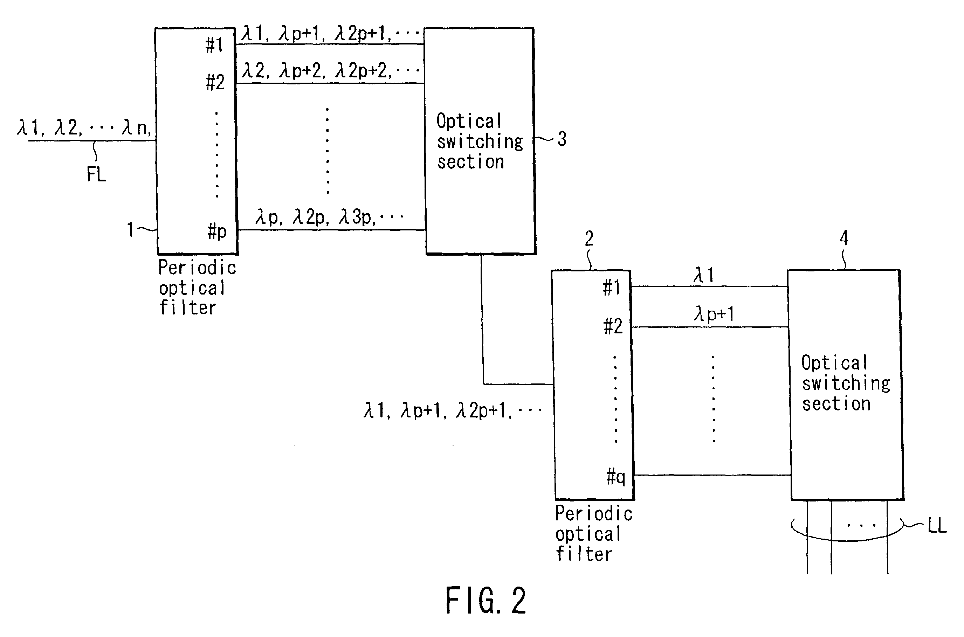

FIG. 2 shows the configuration of a first embodiment of node N1. Each of the remaining node N2 to node N6 has the same configuration. Node N1 comprises a periodic-spectral-response optical filter 1, a periodic-spectral-response optical filter 2, an optical switching section 3, and an optical switching section 4.

In the explanation below, the periodic-spectral-response optical filters are hereinafter just referred to as the periodic optical filters.

The periodic optical filter 1 includes a multiplex port connected to an optical fiber FL in the optical cable SL and a p number of separation ports #1 to #p connected to the optical switching section 3. The optical switching section 3 is connected to the periodic optical filter 2. The periodic optical filter 2 includes a multiplex port connected to the optical switching section 3 and a q number of separation ports #1 to #q connected to the optical switching section 4. The optical switching section 4 is connected to a low-order-group line LL.

In FIG. 2, the optical fiber FL transmits wavelength-multiplexed light. The wavelength-multiplexed light is formed by multiplexing optical signals whose wavelengths are λ1, λ2, ···, λn, respectively, (hereinafter, referred to as wavelength lights). In this embodiment, the individual wavelength lights are arranged at intervals of wavelength Δ.

The periodic optical filter 1 separates the wavelength-multiplexed light. The separated individual wavelength lights are outputted at separation ports #1 to #p at periodic intervals of wavelength. That is, wavelength lights λ1, λp+1, λ2p+1, ··· are outputted from separation port #1. Wavelength lights λ2, λp+2, λ2p+2, ··· are outputted from separation port #2.

In such a state, the cyclic interval of wavelength at each separation port is expressed as being p. In addition, the period of the periodic optical filter 1 is expressed as being p. The periodic optical filter 2 also has the same characteristic. In the embodiment, the period of the periodic optical filter 2 is set to q, a different value from p. The period here means periodic intervals of wavelength, not the period of time. The direction in which the wavelength light propagates is reversible.

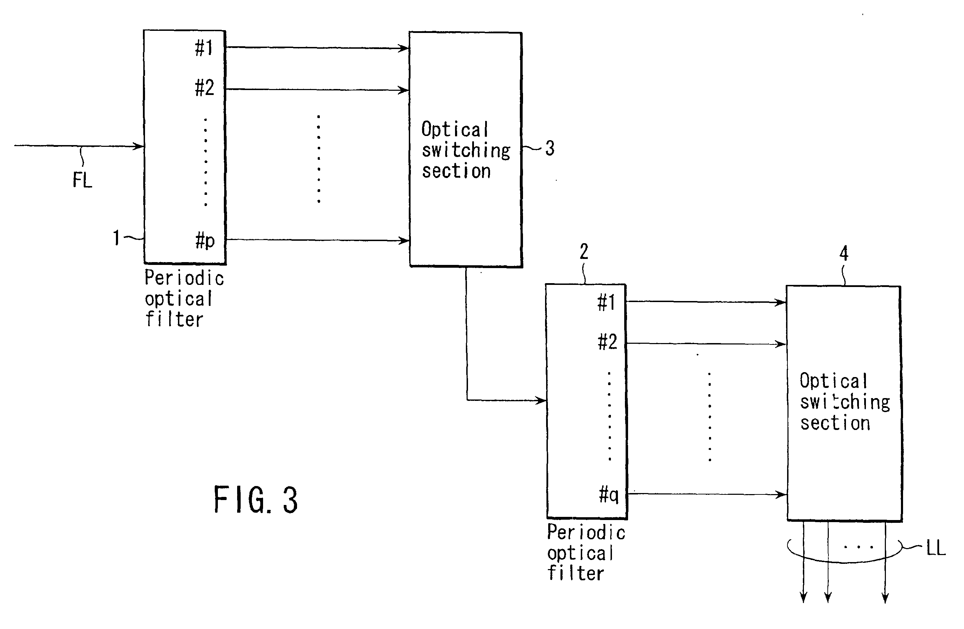

As shown in FIG. 3, there is a direction in which light propagates from the optical fiber FL to the low-order-group line LL. In FIG. 3, the periodic optical filter 1 outputs the wavelength-multiplexed light inputted from the optical fiber FL at any one of the separation ports #1 to #p. The optical switching section 3 selectively inputs the output light from any one of the separation ports of the periodic optical filter 1 to the periodic optical filter 2. The periodic optical filter 2 outputs the wavelength-multiplexed light inputted from the optical switching section 3 at any one of the separation ports #1 to #q. The optical switching section 4 outputs the output light from the periodic optical filter 2 to the low-order-group line LL in a switching manner. By these processes, the periodic optical filters 1, 2 separate the optical signals

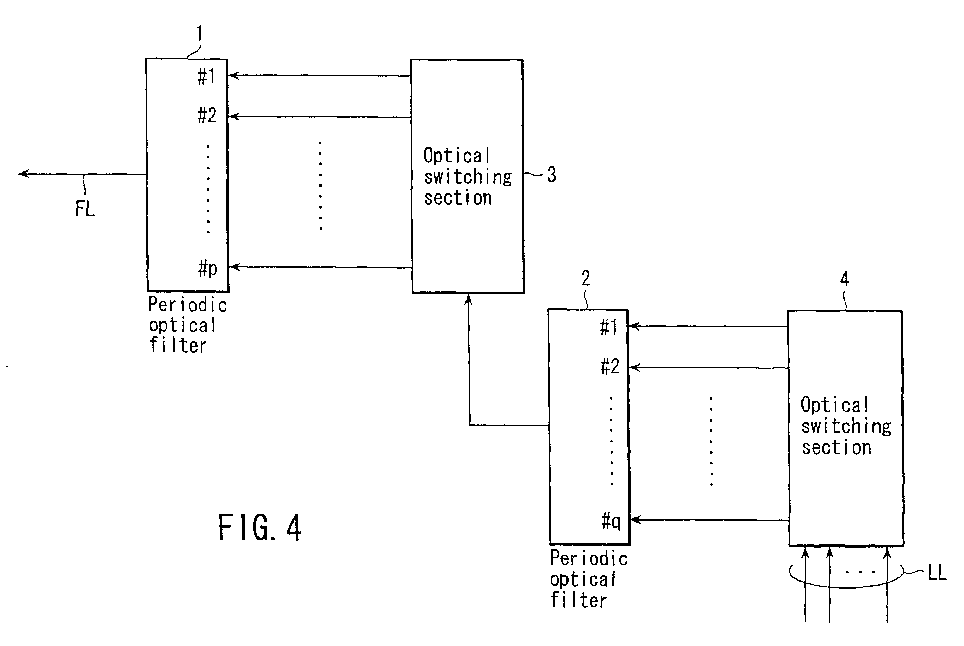

As shown in FIG. 4, there is a direction in which light propagates from the low-order-group line LL to the optical fiber FL. In FIG. 4, the individual wavelength lights introduced via the low-order-group line LL are switched at the optical switching section 4 and then inputted to the periodic optical filter 2. The periodic optical filter 2 multiplexes the individual wavelength lights and inputs the resulting light to the optical switching section 3. The wavelength-multiplexed light is sent from the optical switching section 3 via any one of the separation ports of the periodic optical filter 1 to the optical fiber FL. By these processes, the periodic optical filters 1, 2 multiplex the optical signals. As described above, the optical characteristics of the periodic optical filters 1, 2 provide two reversible directions in which light propagates.

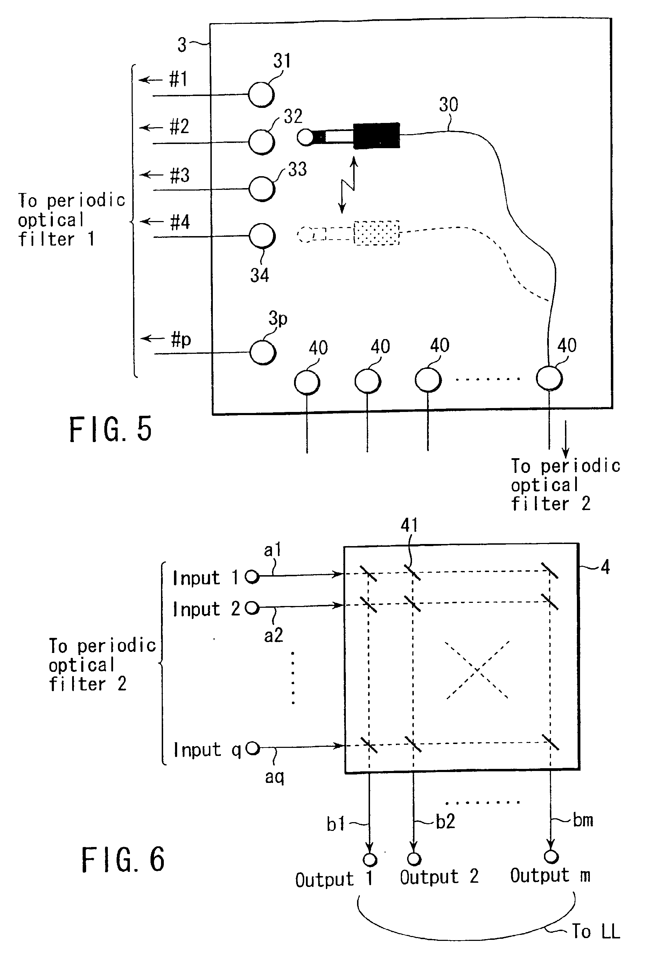

FIG. 5 is a configuration of the optical switching section 3. The optical switching section 3 includes terminals 31 to 3p and terminals 40. The terminals 31 to 3p are connected to the separation ports #1 to #p, respectively. The terminals 40 are connected to the periodic optical filter 2. The terminals 40 are connected via a patch cord 30 to any one of the terminals 31 to 3p.

FIG. 6 shows a configuration of the optical switching section 4. The optical switching section 4 includes input ports a1 to aq and output ports b1 to bm. The input ports a1 to aq are connected to the separation ports #1 to #q, respectively. The output ports b1 to bm are provided on the low-order-group line LL side. Movable mirrors 41 are provided at the intersections of the optical propagation routes extending from the individual ports. The states of the individual movable mirrors 41 cause the separation ports #1 to #q of the periodic optical filter 2 to be connected to the low-order-group line LL arbitrarily in a switching manner.

In the embodiment, the optical switching section 4 has only to be as large as a q × m matrix. That is, the optical switching section 4 has only to be as large as can house the separation ports #1 to #q of the periodic optical filter 2 and an m number of channels of the low-order line LL. The number of separation ports #1 to #q is a fraction of or a few tenths of the total number of wavelengths. Therefore, the scale of the optical switching section 4 is reduced remarkably. The same holds true for the optical switching section 3. Moreover, the optical switching section 3 may be a more primitive device that uses a patch cord instead of a switching device that uses movable mirrors. Use of such a device enables the configuration of the node to be simplified.

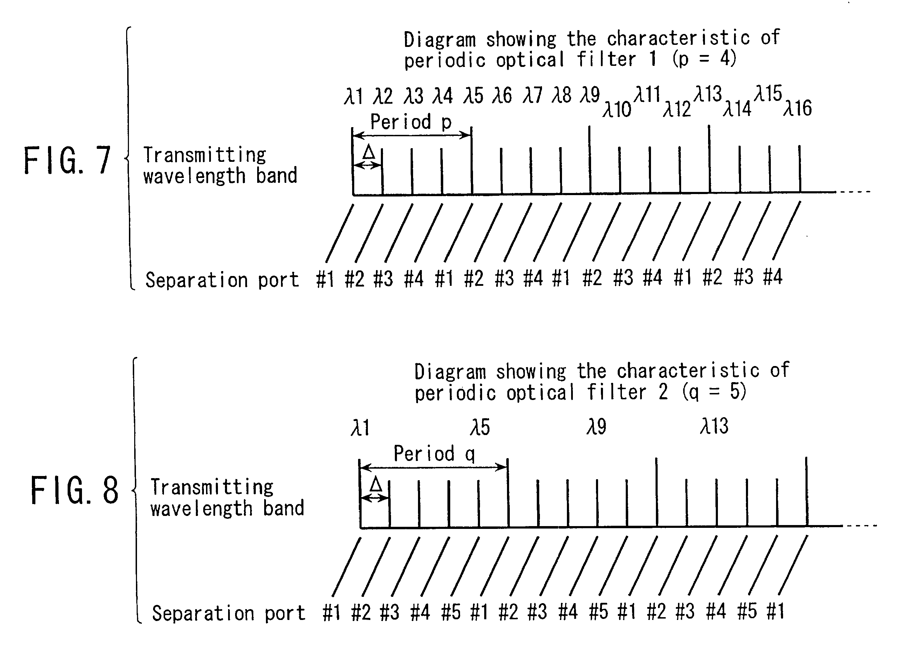

The function of the above configuration will be explained by reference to FIGS. 7 and 8. Let the period of the periodic optical filter 1 be p = 4 and the period of the periodic optical filter 2 be p = 5. It is assumed that the degree of multiplexing of the wavelength-multiplexed light is k = 16 and sixteen wavelengths λ1 to λ16 are included in the wavelength-multiplexed light.

As shown in FIG. 7, the wavelength lights λ1, λ5, λ9 and λ13 appear at the separation port #1 of the periodic optical filter 1. Similarly, the wavelength lights λ2, λ6, λ10 and λ14 appear at the separation port #2 of the periodic optical filter 1. The same holds true for the remaining ports #3 to #5. Table 1 lists the wavelength lights appearing at each of the separation ports #1 to #4 of the periodic optical filter 1.

**Table 1**

| Separation port | Wavelength lights appearing at separation ports | |
|---|---|---|
| #1 | λ1, λ5, λ9, λ3 | Periodic optical filter 1 p = 4 |
| #2 | λ2, λ6, λ10, λ14 | |
| #3 | λ3, λ7, λ11, λ15 | |
| #4 | λ4, λ8, λ12, λ16 | |

As shown in Table 1, each of the separation ports #1 to #4 outputs wavelength-multiplexed light including four wavelength lights. Hereinafter, a group made up of the wavelength lights appearing at each separation port is referred to as a wavelength group.

Table 2 lists the wavelength lights appearing at each of the separation ports #1 to #5 of the periodic optical filter 2 when the wavelength lights λ1 to λ16 are inputted to the periodic optical filter 2.

**Table 2**

| Separation port | Wavelength lights appearing at separation ports | |
|---|---|---|
| #1 | λ1, λ6, λ11, λ16 | Periodic optical filter 2 q = 5 |
| #2 | λ2, λ7, λ12 | |
| #3 | λ3, λ8, λ13 | |
| #4 | λ4, λ9, λ14 | |
| #5 | λ5, λ10, λ15 | |

The comparison of Table 1 and Table 2 shows that the wavelength lights included in the wavelength group generated at the periodic optical filter 1 are not outputted from the same separation ports of the periodic optical filter 2. For example, wavelength light λ1 is outputted from the separation port #1 of the periodic optical filter 2. Wavelength light λ5 is outputted from the separation port #5 of the periodic optical filter 2. Wavelength light λ9 is outputted from the separation port #4 of the periodic optical filter 2. Wavelength light λ13 is outputted from the separation port #3 of the periodic optical filter 2. Wavelength lights λ1 and λ5 will never be outputted from the separation port #1 of the periodic optical filter 2. The reason is that p and q differs from each other.

In FIG. 2, suppose the separation port #1 of the periodic optical filter 1 is connected by the optical switching section 3 to the multiplex port of the periodic optical filter 2. This means that the wavelength group composed of wavelength lights λ1, λ5, λ9, λ13 (the part enclosed by a doted line in Table 1) is selected. In this case, the wavelengths of the output light from the periodic optical filter 2 are shown in FIG. 8.

As shown in FIG. 8, wavelength light λ1 is outputted from the separation port #1 of the periodic optical filter 2. Wavelength light λ5 is outputted from the separation port #5. Wavelength light λ9 is outputted from the separation port #4. Wavelength light λ13 is outputted from the separation port #3. These are also listed in Table 2. That is, the individual wavelength lights are separated completely.

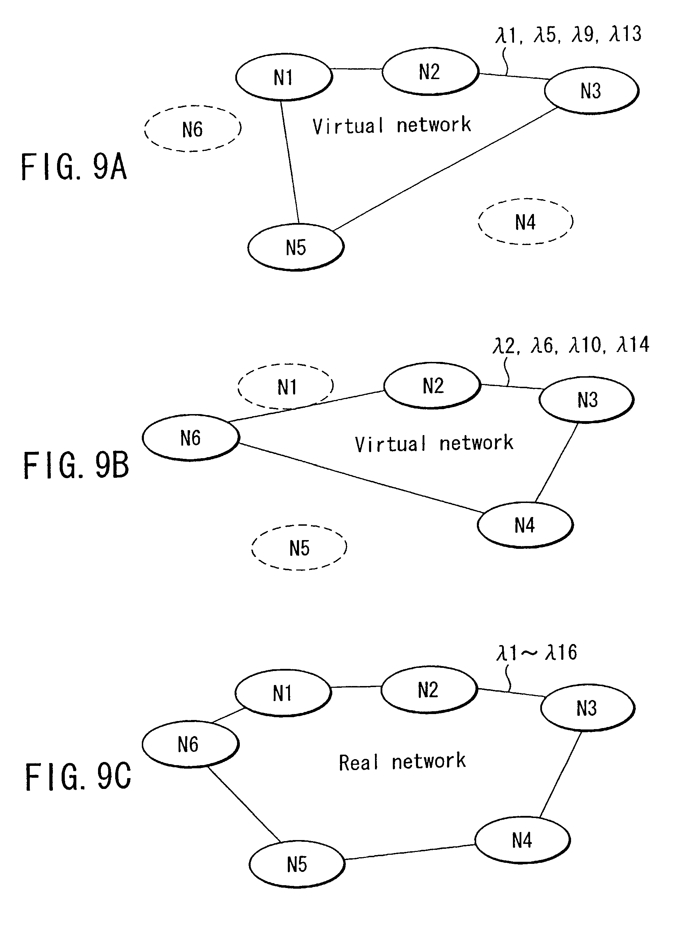

As shown in FIGS. 9A to 9C, an arbitrary wavelength group is selected at the optical switching section 3, thereby forming a plurality of virtual networks on a real network. The real network shown in FIG. 9C is a network to which wavelength lights λ1 to λ16 belong.

Wavelength lights λ1, λ5, λ9, λ13 belong to the virtual network of FIG. 9A. The virtual network is composed of, for example, nodes N1, N2, N3, and N5. Wavelength lights λ2, λ6, λ10, λ14 belong to the virtual network of FIG. 9B. The virtual network is composed of, for example, nodes N2, N3, N4, and N6.

As described above, the connection state of the optical switching section 3 is changed, thereby selecting any one of the wavelength groups, which enables the wavelength allocated to each node to be selected arbitrarily and easily. This makes it possible to allocate a wavelength to each node arbitrarily without the intervention of such a device as a branch unit. Furthermore, the allocated wavelength can be changed arbitrarily.

### (Second Embodiment)

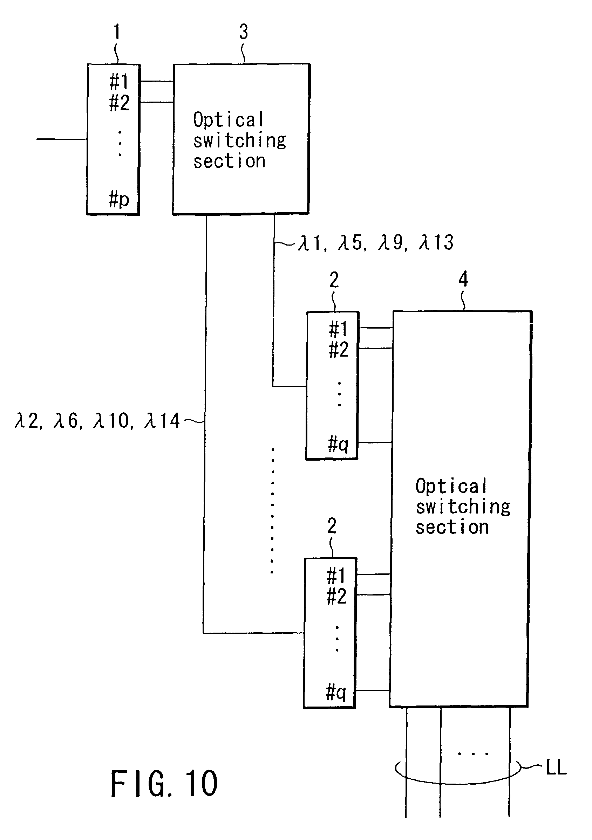

In FIGS. 9A to 9C, nodes N2 and N3 belong to two virtual networks. To realize this form, nodes N2, N3 have to be constructed as shown in FIG. 10.

FIG. 10 shows the configuration of a second embodiment of a node according to the present invention. In FIG. 10, the same parts as those in FIG. 2 are indicated by the same reference numerals and only what differs from FIG. 2 will be explained. The node shown in FIG. 10, which comprises a plurality of periodic optical filters 2, is so constructed that an optical switching section 3 supplies a plurality of wavelength groups to the respective periodic optical filters 2.

With this configuration, too, the wavelength lights included in each wavelength group are separated completely at the periodic optical filter 2. In the configuration of FIG. 10, a plurality of wavelength groups can be selected at the node. This means that the node can belong to a plurality of virtual networks. That is, it is possible to provide a node belonging to a plurality of virtual networks in a real network as nodes N2 and N3 in FIGS. 9A to 9C. Therefore, the configuration of the second embodiment is effective in forming a node that needs a large number of wavelengths to handle a lot of traffic.

### (Third Embodiment)

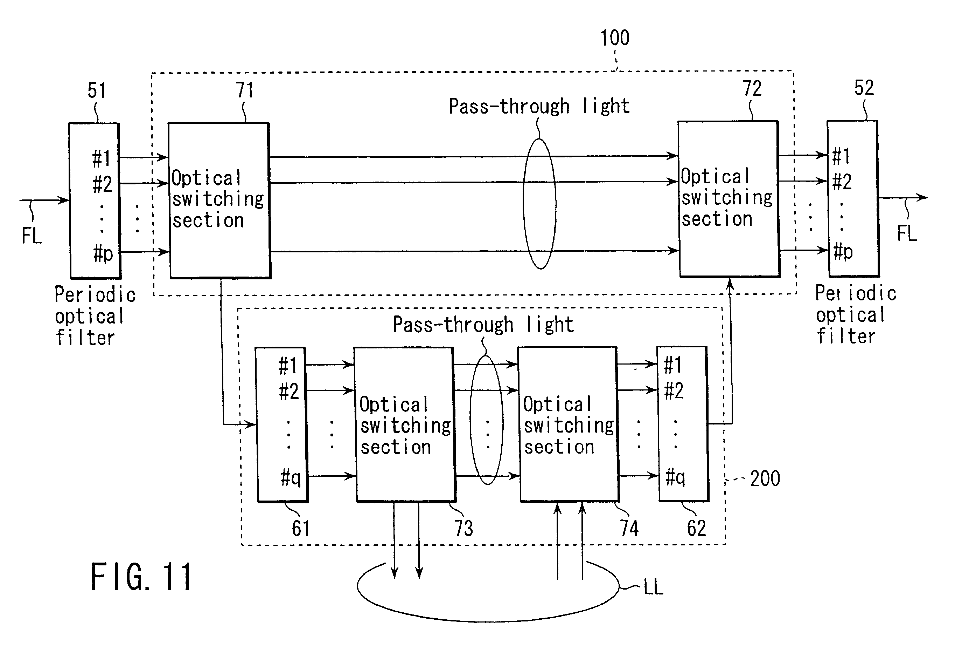

FIG. 11 shows the configuration of a third embodiment of a node related to the present invention. In the node shown in FIG. 11, the direction of propagation shown in FIG. 3 is combined with the direction of propagation shown in FIG. 4. This configuration enables optical signals to be added or dropped on a wavelength basis.

In the configuration, an optical transmission path formation section 100 includes two optical switching sections 71, 72. The optical switching section 100 forms optical transmission paths that connects any one of the separation ports #1 to #p of a periodic optical filter 51 to any one of the separation ports #1 to #p of a periodic optical filter 52 in a one-to-one correspondence. For example, in one of the optical transmission paths, an optical add/drop section 200 is inserted.

The optical add/drop section 200, which includes periodic optical filters 61, 62 and optical switching sections 73, 74, adds and drops optical signals in wavelengths with the low-order-group line LL. The period of the periodic optical filters 51, 52 is p and the period of the periodic optical filters 61, 62 is q. The function of each filter is the same as that explained in the first or second embodiment. The third embodiment uses reversibility with the direction in which this type of filter allows light to propagate.

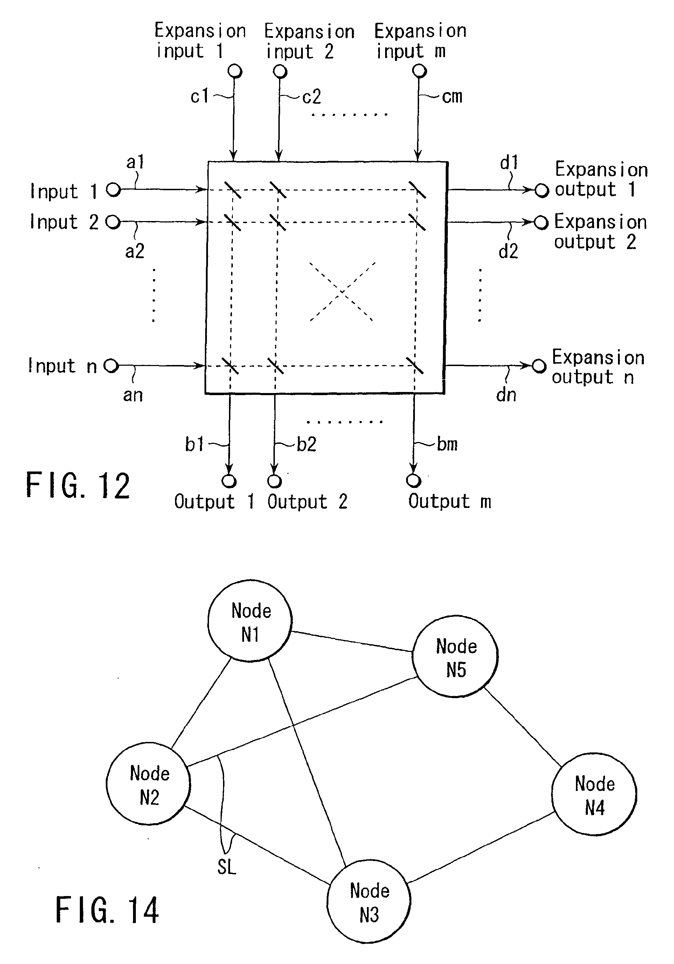

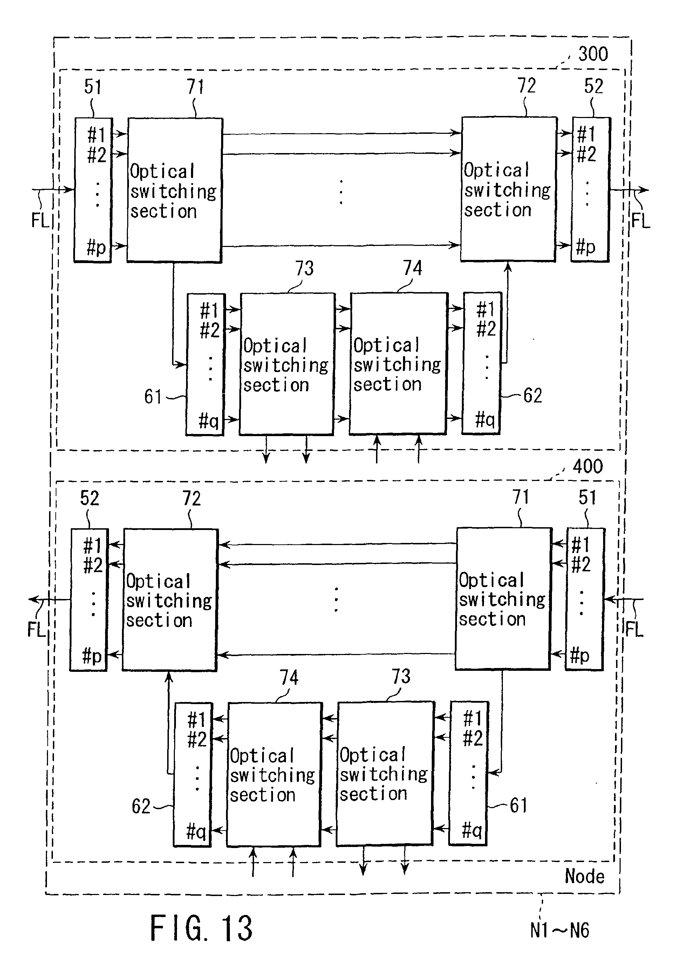

FIG. 12 is a block diagram showing a configuration of the optical switching sections 71, 72, 73, and 74. The optical switching section shown in FIG. 13, in addition to the configuration of FIG. 6, further includes expansion input ports c1 to cm and expansion output ports d1 to dn. This type of device is known as an expansion optical matrix switch.

For example, receiving a control signal, the optical matrix switch of FIG. 12 is capable of changing its internal optical path. That is, the input optical signal to an arbitrary input port ar (1 ≦ r ≦ n) can be outputted at an arbitrary output port bs (1 ≦ s ≦ m).

When the input optical signal to a certain input port ar is not outputted at any of the output ports b1 to bm, the input optical signal to the input port ar is outputted at the expansion output port dr transparently. The input optical signal from the expansion input port cs is outputted transparently from the output port bs (1 ≦ s ≦ m) to which the input optical signal from any one of the input ports a1 to an is not connected.

This type of optical matrix switch is realized by placing, for example, microscopic movable mirrors at the interconnections of the input ports a1 to an and the output ports b1 to bm and changing the reflection angles of the mirrors physically. The light hitting a movable mirror is bent in its propagation path.

In FIG. 11, the expansion output ports of the optical switching section 71 are connected to the input ports of the optical switching section 72 respectively. The expansion output ports of the optical switching section 73 are connected to the input ports of the optical switching section 74 respectively.

With this configuration, the node of the third embodiment allows an arbitrary wavelength light or wavelength group to pass through. "Pass through" here means the process of allowing wavelength light to pass through the node transparently, regardless of the add process or the drop process.

Since such a process can be carried out, a communication path can be set more freely in the network. Moreover, a wavelength unrelated to add/drop car be transmitted to adjacent nodes transparently. This function is particularly indispensable for forming a virtual network in a ring network as shown in FIG. 1. Therefore, use of nodes of the third embodiment enables a network closer to an actual operation form to be constructed.

### (Fourth Embodiment)

FIG. 13 shows the configuration of a fourth embodiment of a node related to the present invention. In FIG. 13, the node shown in FIG. 11 is used as an optical transmission unit for one direction. Two optical transmission units of this type are combined in the fourth embodiment. With this configuration, it is possible to transmit optical signals bidirectionally.

### (Fifth embodiment)

FIG. 14 schematically shows a configuration of a fifth embodiment of a wavelength multiplexing optical transmission system according to the present invention. In this system, a plurality of nodes N1 to N5 are connected in a mesh via optical cables SL.

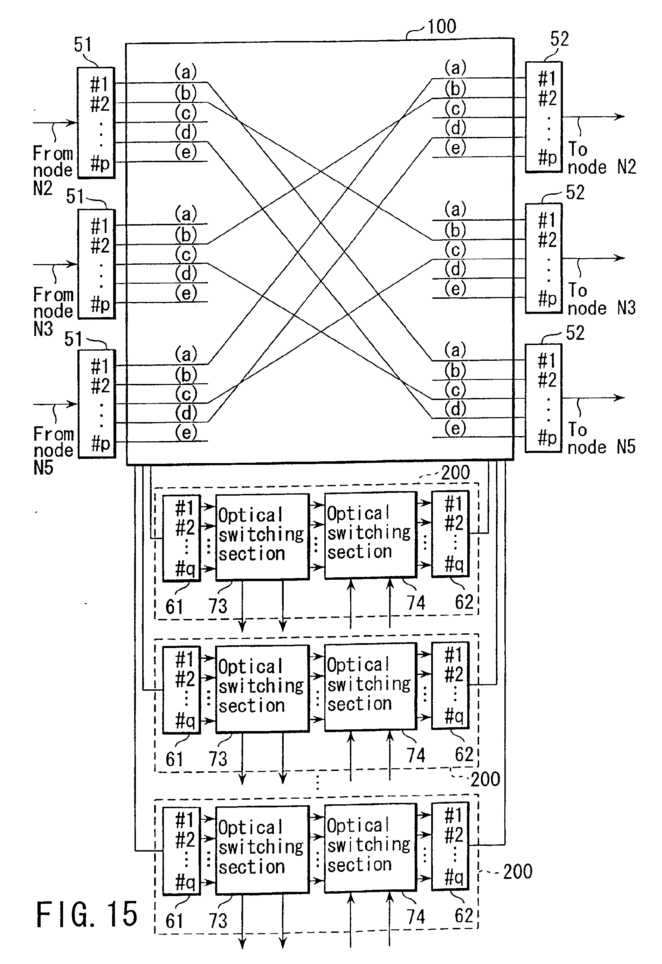

FIG. 15 is a block diagram showing the configuration of a node used in the system shown in FIG. 14. In FIG. 15, the same parts as those in FIGS. 11 and 13 are indicated by the same reference numerals. FIG. 15 shows the configuration of node N1. The remaining nodes N2 to N5 each have the same configuration.

The node shown in FIG. 15 includes a plurality of pairs of periodic optical filters 51, 52. The pairs composed of both of the filters are provided according to the number of the other nodes to be connected. Since node N1 is connected to nodes N2, N3, and N5, it has three pairs of periodic optical filters 51, 52. The node of FIG. 15 has as many optical add/drop sections 200 as needed. Then, an optical transmission path including the periodic optical filters 51, 52 and optical add/drop sections 200 is formed by an optical transmission path forming section 100 arbitrarily.

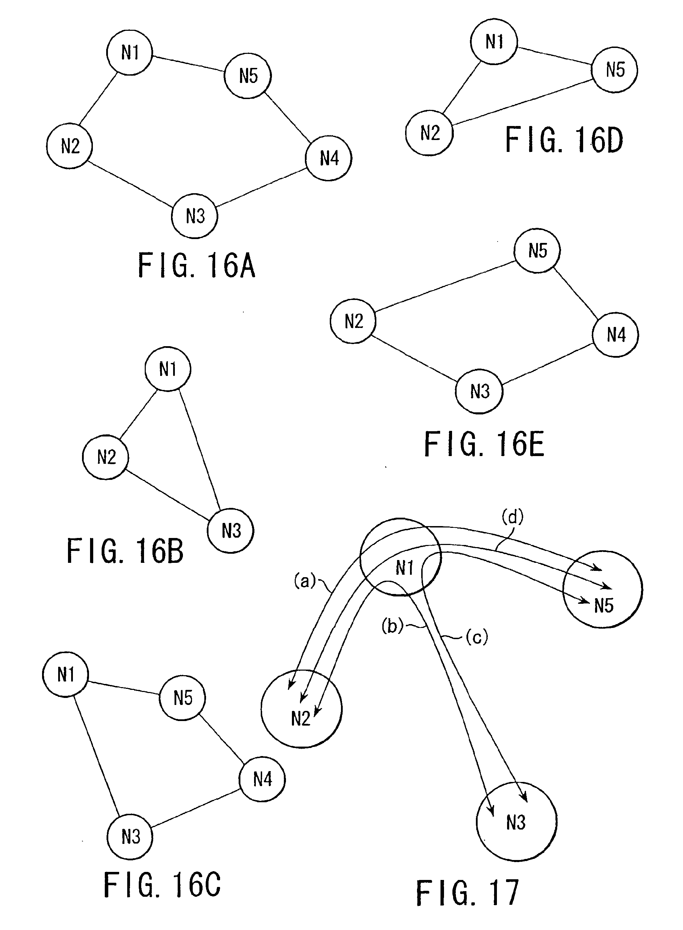

FIGS. 16A to 16E show examples of virtual networks formed on the system shown in FIG. 14. The network shown in FIG. 14 can be regarded as a plurality of ring networks shown in FIGS. 16A to 16E being multiplexed. The individual ring networks of FIGS. 16A to 16E correspond respectively to a plurality of wavelength groups formed by grouping the wavelength-multiplexed lights flowing through the optical cables.

FIG. 17 shows the flow of optical signals, centering on node N1 in FIGS. 16A to 16D. The letter (a) in FIG. 17 corresponds to the ring network (virtual network) of FIG. 16A. The letter (b) in FIG. 17 corresponds to the ring network of FIG. 16B. The letter (c) in FIG. 17 corresponds to the ring network of FIG. 16C. The letter (d) in FIG. 17 corresponds to the ring network of FIG. 16D. The flow of signals in FIG. 17 is realized by setting the connection state of the optical transmission path forming section 100 of node N1 as shown in FIG. 15.

The letter (a) in FIG. 15 corresponds to the wavelength group constituting the virtual network of FIG. 16A. The letter (b) in FIG. 15 corresponds to the wavelength group constituting the virtual network of FIG. 16B. The letter (c) in FIG. 15 corresponds to the wavelength group constituting the virtual network of FIG. 16C. The letter (d) in FIG. 15 corresponds to the wavelength group constituting the virtual network of FIG. 16D. The letter (e) in FIG. 15 corresponds to the wavelength group constituting the virtual network of FIG. 16E. Depending on the capacity of the wavelength group, a plurality of wavelength groups may be allocated to a single virtual network.

The optical transmission path forming section 100 of FIG. 15 connects wavelength group (a) to nodes N2 and N5, which realizes the signal path indicated by the letter (a) in FIG. 17. The same holds true for the remaining wavelength groups (b) to (d).

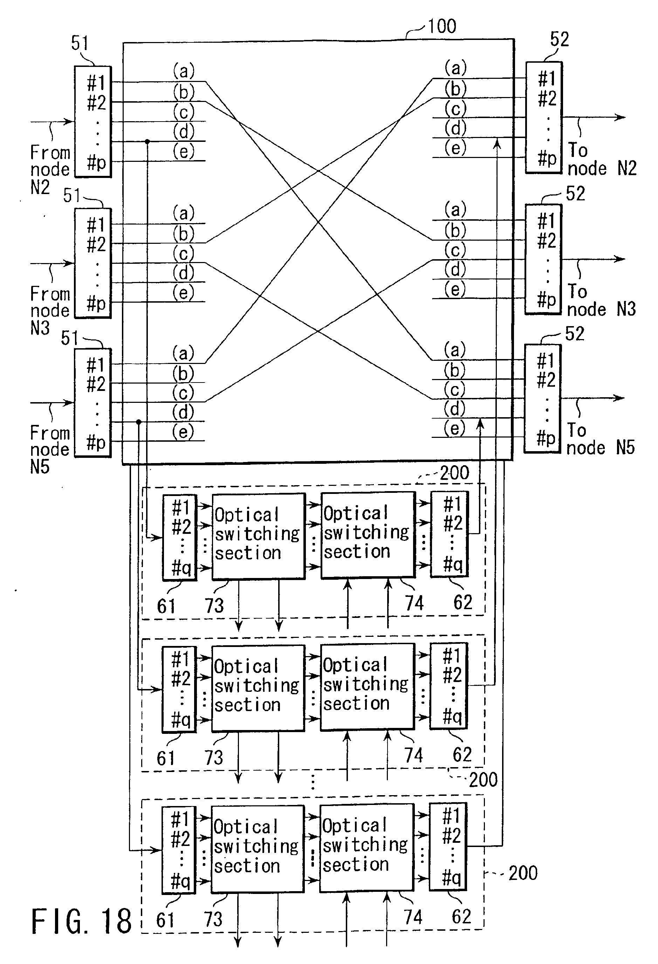

FIG. 18 shows a setting state of the optical transmission path forming section 100 when there is a wavelength to be dropped or added at node N1. In FIG. 18, wavelength group (d) is connected to an optical add/drop section 200. The wavelength group (d) is separated into the individual wavelength lights at the optical add/drop section 200, which are then dropped to the low-order-group line LL. Wavelength lights with the same wavelengths as the dropped wavelengths are introduced from the low-order-group line LL and multiplexed into wavelength group (d) at a periodic optical filter 62.

As described above, according to the fifth embodiment, the present invention can be applied to a mesh-like network.

As has been described above, in each of the first to fifth embodiments, the periodic optical filter 1 is provided. Using the periodic optical filter 1's function of separating wavelength-multiplexed light at periodic intervals of wavelength causes a wavelength group to be made up of the following wavelength lights: (λ1, λp+1, λ2p+1, ···), (λ2, λp+2, λ2p+2, ···), ···. The optical switching section 3 selects any one of the wavelength groups and introduces the selected wavelength group into the periodic optical filter 2. The period p of the periodic optical filter 1 differs from the period q of the periodic optical filter 2 in such a manner that the wavelength lights included in each wavelength group are outputted at the different separation ports of the periodic optical filter 2. This makes it possible to separate one wavelength light from the other wavelength lights completely.

By doing this, the connection setting of the optical switching section 3 enables the allocation of wavelengths to the individual nodes to be changed arbitrarily and easily. That is, wavelength allocation can be performed more dynamically. This makes it possible to change the allocation of wavelengths to the individual nodes in the network simultaneously, using, for example, a dedicated control signal. Consequently, the convenience of network operation is improved remarkably.

Furthermore, all of the wavelengths can be separated without using as large an optical switch as can handle all of the wavelengths. This makes it possible to provide a wavelength multiplexing optical transmission system which enables the system configuration to be changed easily. Furthermore, it is possible to provide a simple-structure optical node unit which enables the configuration of the wavelength multiplexing transmission system to be changed easily.

The present invention is not limited to the above embodiments. While in the embodiments, the period p of the periodic optical filter 1 is 4 and the period q of the periodic optical filter 2 is 5, p and q are not restricted to these values. For instance, they may be (p, q) = (5, 4) or (p, q) = (7, 3). Generally, p × q has only to be larger than the number of wavelengths to be multiplexed.

As for the scale of the optical switching section 4, p and q have the optimum values. In the embodiments of the present invention, p and q preferably meet the expression p < q. More preferably, p is so set that the number of wavelengths to be multiplexed can be divided by p.

Referring to Table 3 and Table 4, the best combination of p and q will be explained. Table 3 lists scales that the optical switching section 4 is required to have when (p, q) = (4, 5).

**Table 3**

| Case of (p, q) = (4, 5) | | | | |
|---|---|---|---|---|
| Separation port selected at optical switching section 3 | Wavelength light | Number of wavelengths multiplexed | Number of separation ports of periodic optical filter 2 | Scale of optical switching section 4 |
| #1 | λ1, λ5, λ9, λ13 | 4 | 5 | 5 × 4 |
| #2 | λ2, λ6, λ10, λ14 | 4 | | 5 × 4 |
| #3 | λ3, λ7, λ11, λ15 | 4 | | 5 × 4 |
| #4 | λ4, λ8, λ12, λ16 | 4 | | 5 × 4 |

In the case of Table 3, multiplexed light including four wavelength lights is outputted at any of the separation ports #1 to #4 of the periodic optical filter 1. The number (q) of the separation ports of the periodic optical filter 2 is 5. For this reason, for the low-order-group line LL to output four wavelength lights inputted from any of the five input channels without permitting them to overlap with one another, an optical switching section 4 with a 5 × 4 scale is needed.

On the other hand, Table 4 lists scales that the optical switching section 4 is required to have when (p, q) = (5, 4)

**Table 4**

| Case of (p, q) = (5, 4) | | | | |
|---|---|---|---|---|
| Separation port selected at optical switching section 3 | Wavelength light | Number of wavelengths multiplexed | Number of separation ports of periodic optical filter 2 | Scale of optical switching section 4 |
| #1 | λ1, λ6, λ11, λ16 | 4 | 4 | 4 × 4 |
| #2 | λ2, λ7, λ12 | 3 | | 4 × 3 |
| #3 | λ3, λ8, λ13 | 3 | | 4 × 3 |
| #4 | λ4, λ9, λ14 | 3 | | 4 × 3 |
| #5 | λ5, λ10, λ15 | 3 | | 4 × 3 |

In the case of Table 4, there is a variation in the number of wavelength lights outputted from the separation ports #1 to #5 of the periodic optical filter 1. The number of wavelength lights outputted from the separation ports #2 to #5 is 3, whereas only the number of wavelength lights outputted from the separation port #1 is 4. Since the number (q) of the separation ports of the periodic optical filter 2 is 4, there are two cases: one case where the optical switching section 4 is required to have a 4 × 3 scale and the other case where the optical switching section 4 is required to have a 4 × 4 scale. That is, in the case of Table 4, although most cases can be deal with by the 4 × 3 scale, only one case (a case where separation port #1 is used) requires the optical switching section 4 to have a 4 × 4 scale.

Such a waste of configuration should be avoided. Although a 4 × 3 optical switching section and a 4 × 4 optical switching section could be prepared and selectively used according to the needs, this would deteriorate flexibility in operating the network, which is therefore undesirable.

To avoid such a disadvantage, the number of wavelength lights outputted from the separation ports of the periodic optical filter 1 is made equal in all cases. By doing this, it is possible to make use of the scale of the optical switching section 4 without any waste. From this, it can be seen that, when wavelength-multiplexed light with, for example, a degree of multiplexing of k = 16 is handled, p = 4, instead of p = 5, is used so that k can be divided by p.

If p = 5 is used, the number of cases where the optical switching section 4 is required to have a 4 × 3 scale is limited to one and all the remaining cases require the optical switching section 4 to have a 4 × 4 scale. This configuration is more preferable because the waste is reduced. This condition is realized when the degree of multiplexing of wavelength-multiplexed light is k = 19. In other words, to reduce the waste of the scale of the optical switching section 4 when the degree of multiplexing of wavelength-multiplexed light is k = 19, p is set to p = 5. That is, since 19 is a prime number, the waste of the configuration cannot be avoided when k = 19. In this case, it is important to set the value of p, regarding the minimization of the waste as the most important thing.

Generally, when k cannot be divided by p, if p is so set that the remainder j meets the expression j > p/2, the waste of the scale of the optical switching section 4 can be reduced.

In the present invention, it is not necessary that p and q should be prime to each other. That is, they may take the values of (p, q) = (6, 3) or (p, q) = (6, 4). With these values, the number of separable wavelengths is smaller than p × q, but setting suitably the scale of the periodic optical filters 1 ,2 and the number of wavelengths to be multiplexed makes it possible to construct a system capable of separating all the wavelength lights. That is, even if p and q are not prime to each other, this has no influence on the object and effect of the present invention. When p and q are not prime to each other, the scale of the optical filters 1, 2 are large for the number of wavelengths to be multiplexed. This, however, enables the configuration of the optical switching sections 3, 4 to be simplified. Therefore, this contributes to simplifying the configuration of the entire system.

Furthermore, in the optical transmission path forming section 100 shown in FIG. 15 or 18, it is more desirable that unconnected ports should be connected symmetrically, regardless of whether there is a path or not.

Moreover, in FIGS. 15 and 18, the optical transmission path forming section 100 may be connected in such a manner that the wavelength group introduced from a certain node is returned to the same node. By doing this, a loop back path is formed in the network. The loop back path is used to return a control signal in testing a system.

In addition, the configuration of FIG. 13 is not limited to the application to a ring network. The configurations shown in FIGS. 15 and 18 are not restricted to the application to a mesh-like network.

Furthermore, the optical transmission forming section 100 of FIG. 12 may not be composed of a combination of optical switches as shown in FIG. 12. For instance, like the configuration of FIG. 5, the optical transmission forming section 100 may be such that the separation ports #1 to #p of the periodic optical filter 51 are connected to the separation ports #1 to #p of the periodic optical filter 52 with patch cords. Besides, as for the configuration of the optical switching sections 3, 4, the number of wavelength lights to be multiplexed, and others, the present invention may be practiced or embodied in still other ways without departing from the essential character thereof as defined in the claims.

## Claims

1. An optical node unit comprising:
a first periodic optical device (51) which includes a first port and a plurality of second ports and which, when wavelength-multiplexed light including a plurality of wavelength lights arranged at equal intervals of wavelength is inputted to said first port, allows the individual wavelength lights to appear at any of said plurality of second ports at first cyclic intervals of wavelength;
a second periodic optical device (52) which includes a third port and a plurality of fourth ports and which, when a plurality of wavelength lights arranged at equal intervals of wavelength are inputted to said plurality of fourth ports at second cyclic intervals of wavelength, allows wavelength-multiplexed light including the individual wavelength lights to appear at said third port;
an optical transmission path forming section (100) which forms a plurality of transmission paths that connect said second ports to said fourth ports in a one-to-one correspondence;
an optical add/drop section (200) which is inserted in the middle of at least one of said optical transmission paths and which includes
a third periodic optical device (61) that includes a fifth port optically connected to one end of said optical transmission path and a plurality of sixth ports and that, when wavelength-multiplexed light including a plurality of wavelength lights arranged at equal intervals of wavelength is inputted to said fifth port, allows the individual wavelength lights to appear at any of said plurality of sixth ports at third cyclic intervals of wavelength,
a fourth periodic optical device (62) that includes a seventh port optically connected to the other end of said optical transmission path and a plurality of eighth ports and that, when a plurality of wavelength lights arranged at equal intervals of wavelength are inputted to said plurality of eighth ports at fourth cyclic intervals of wavelength, allows wavelength-multiplexed light including the individual wavelength lights to appear at said seventh port, and
an optical switching section (73, 74) that is connected to said sixth port and said plurality of eighth ports and performs, on a wavelength basis, an optical add/drop process of the lights inputted and outputted via said plurality of eighth ports, **characterised in that**
said first cyclic intervals differ from said fourth cyclic intervals, and said second cyclic intervals differ from said third cyclic intervals.

2. The optical node unit according to claim 1 **characterized by** further comprising:
a first optical transmission unit (300) and a second optical transmission unit (400) each of which transmits light in a different direction from the other and includes
the first periodic optical device (51),
the second periodic optical device (52),
the optical transmission path forming section (100) and the optical add/drop section (200).

3. The optical node unit according to claim 1 or 2, **characterized in that** if the degree of multiplexing of said wavelength-multiplexed light is k and said first cyclic interval is p, at least one of the values of k and p is so set that k can be divided by p.

4. The optical node unit according to claim 1 or 2, **characterized in that** if the degree of multiplexing of said wavelength-multiplexed light is k and said first cyclic interval is p, when k cannot be divided by p, at least one of the values of k and p is so set that the remainder meets the expression j > p/2.

5. A wavelength multiplexing optical transmission system comprising the optical node unit according to claims 1 or 2.

6. A wavelength separating method used in a wavelength multiplexing optical transmission system, **characterized by** comprising:
a first step of grouping the individual wavelength lights included in wavelength-multiplexed light into a plurality of wavelength groups using a first cyclic de-muliplexer at a first cyclical interval;
a second step of separating the individual wavelength lights include in the wavelength groups formed in the first step using a second cyclic de-multplexer, at a second cyclic interval;
a third step of passing through an arbitrary wavelength light or wavelength group to pass through,
and **characterised in that** the first and **second cyclic** intervals are different from each other.

## Patentansprüche

1. Eine optische Knoteneinheit, die Folgendes aufweist:
Eine erste periodisch optische Einrichtung (51), die einen ersten Port und eine Mehrzahl von zweiten Ports umfasst, und die, wenn Wellenlängen-multiplexiertes Licht einschließend eine Mehrzahl von Wellenlängenlichtern arrangiert bei gleichen Intervallen der Wellenlänge an dem ersten Port eingehend ist, den individuellen Wellenlängenlichtern ein Auftreten an jedem der Mehrzahl von zweiten Ports bei ersten zyklischen Intervallen von Wellenlängen ermöglicht;
eine zweite periodisch optische Einrichtung (52), die einen dritten Port und eine Mehrzahl von vierten Ports umfasst und die, wenn eine Mehrzahl von Wellenlängenlichtern arrangiert bei gleichen Intervallen der Wellenlänge eingehend sind an.der Mehrzahl von vierten Ports bei zweiten zyklischen Intervallen der Wellenlänge, Wellenlängen-multiplexiertes Licht einschließend die individuellen Wellenlängenlichter ein Auftreten an den dritten Ports ermöglicht;
einen optischen Transmissionspfad formenden Abschnitt (100), der eine Mehrzahl von Transmissionspfaden formt, die die zweiten Ports mit den vierten Ports in einer Eins-zu-Eins Korrespondenz konnektieren;
einen optischen add/drop-Abschnitt (200) (bzw. einen optischen Hinzufügungs-/Entnahme-Abschnitt (200)), der eingefügt ist in der Mitte von wenigstens einem der optischen Transmissionspfade und der aufweist
eine dritte periodisch optische Einrichtung (61), die aufweist einen fünften Port optisch konnektiert mit einem Ende des optischen Transmissionspfades und eine Mehrzahl von sechsten Ports und die, wenn Wellenlängen-multiplexiertes Licht einschließend eine Mehrzahl von Wellenlängenlichtern arrangiert bei gleichen Intervallen der Wellenlänge an dem fünften Port eingehend ist, den individuellen Wellenlängenlichtern ein Auftreten an jedem der Mehrzahl von sechsten Ports bei dritten zyklischen Intervallen von Wellenlängen ermöglicht;
eine vierte periodisch optische Einrichtung (62), die aufweist einen siebten Port optisch konnektiert mit dem anderen Ende des optischen Transmissionspfades und eine Mehrzahl von achten Ports und die, wenn eine Mehrzahl - 3 -Intervallen der Wellenlänge eingehend sind an der Mehrzahl von achten Ports bei vierten zyklischen Intervallen der Wellenlänge, den Wellenlängen-multiplexiertem Licht einschließend die individuellen Wellenlängenlichtern ein Auftreten an den siebten Ports ermöglicht, und
einen optischen Schaltungsabschnitt (73, 74), der konnektiert ist mit dem sechsten Port und der Mehrzahl von achten Ports und auf einer Wellenlängenbasis einen optischen add/drop-Prozess (bzw. einen Hinzufügungs-/Entnahme-Prozess) des mittels der Mehrzahl von achten Ports eingehenden und ausgehenden Lichts ausführt,
**dadurch gekennzeichnet,**
**dass** die ersten zyklischen Intervalle abweichen von den vierten zyklischen Intervallen, und
**dass** die zweiten zyklischen Intervalle abweichen von den dritten zyklischen Intervallen.

2. Optische Knoteneinheit nach Anspruch 1, welche des Weiteren Folgendes aufweist:
eine erste optische Transmissionseinheit (300) und eine zweite optische Transmissionseinheit (400), von denen jede Licht in voneinander unterschiedliche Richtungen transmittiert, und umfasst
die erste periodisch optische Einrichtung (51),
die zweite periodisch optische Einrichtung (52),
den optischen Transmissionspfad formenden Abschnitt (100)
und den optischen add/drop-Abschnitt (200) (bzw. einen Hinzufügungs-/Entnahme-Abschnitt (200)).

3. Optische Knoteneinheit nach Anspruch 1 oder 2, **dadurch gekennzeichnet, dass** wenn der Grad des Multiplexierens des Wellenlängen-multiplexierten Lichts k ist und das erste zyklische Intervall p ist, wenigstens einer der Werte von k und p derart bestimmt ist, dass k durch p dividierbar ist.

4. Optische Knoteneinheit nach Anspruch 1 oder 2, **dadurch gekennzeichnet, dass** wenn der Grad des Multiplexierens des Wellenlängen-multiplexierten Lichts k ist und das erste zyklische Intervall p ist, dass, wenn k nicht durch p dividierbar ist, wenigstens einer der Werte von k und p derart bestimmt ist, dass der Restbetrag den Ausdruck j > p/2 erfüllt.

5. Wellenlängen multiplizierendes optisches Transmissionssystem aufweisend eine optische Knoteneinheit nach Anspruch 1 oder 2.

6. Wellenlängen-Separationsverfahren zur Verwendung in einem Wellenlängen multiplizierenden optischen Transmissionssystem, welches Folgendes aufweist:
einen ersten Schritt des Gruppierens von individuellen Wellenlängenlichter inkludiert in Wellenlängen-multiplexiertem Licht zu einer Mehrzahl von Wellenlängengruppen durch einen ersten zyklischen De-Multiplexer bei einem ersten zyklischen Intervall;
einen zweiten Schritt des Separierens von individuellen Wellenlängenlichtern inkludiert in den durch den ersten Schritt erstellten Wellenlängengruppen durch einen zweiten zyklischen De-Multiplexer bei einem zweiten zyklischen Intervall;
einen dritten Schritt zum Passieren eines willkürlichen Wellenlängenlichts oder einer Wellenlängengruppe zum Passieren;
und **dadurch gekennzeichnet, dass** das erste und zweite zyklische Intervall voneinander differieren.

## Revendications

1. Unité de noeud optique comprenant :
un premier dispositif optique périodique (51) incluant un premier port et une pluralité de deuxièmes ports et qui, lorsque de la lumière multiplexée en longueur d'onde incluant une pluralité de lumières de longueurs d'ondes agencées à intervalles égaux de longueur d'onde est appliquée à l'entrée dudit premier port, permet l'apparition des lumières de longueurs d'ondes individuelles sur un port quelconque de ladite pluralité de deuxièmes ports à des premiers intervalles cycliques de longueurs d'ondes ;
un deuxième dispositif optique périodique (52) incluant un troisième port et une pluralité de quatrièmes ports et qui, lorsqu'une pluralité de lumières de longueurs d'ondes agencées à intervalles égaux de longueur d'onde sont appliquées à l'entrée de ladite pluralité de quatrièmes ports à des deuxièmes intervalles cycliques de longueur d'onde, permet l'apparition de lumière multiplexée en longueur d'onde incluant les lumières de longueurs d'ondes individuelles audit troisième port ;
une section de formation de chemins de transmission optique (100) formant une pluralité de chemins de transmission qui relient lesdits deuxièmes ports audit quatrième port en une correspondance biunivoque ;
une section d'insertion/extraction optique (200) qui est insérée au milieu d'au moins l'un desdits chemins de transmission optique et qui comporte
un troisième dispositif optique périodique (61) incluant un cinquième port relié optiquement à une extrémité dudit chemin de transmission optique et une pluralité de sixièmes ports et qui, lorsqu'une lumière multiplexée en longueur d'onde incluant une pluralité de lumières de longueurs d'ondes agencées à intervalles égaux de longueur d'onde est appliquée à l'entrée dudit cinquième port, permet l'apparition des lumières de longueurs d'ondes individuelles sur un port quelconque de ladite pluralité de sixièmes ports à des troisièmes intervalles cycliques de longueur d'onde,
un quatrième dispositif optique périodique (62) incluant un septième port relié optiquement à l'autre extrémité dudit chemin de transmission optique et une pluralité de huitièmes ports et qui, lorsqu'une pluralité de lumières de longueurs d'ondes agencées à intervalles égaux de longueur d'onde sont appliquées à l'entrée de ladite pluralité de huitièmes ports à des quatrièmes intervalles cycliques de longueur d'onde, permet l'apparition de lumière multiplexée en longueur d'onde incluant les lumières de longueurs d'ondes individuelles audit septième port, et
une section de commutation optique (73, 74) reliée audit sixième port et à ladite pluralité de huitièmes ports et qui effectue, par longueur d'onde, un processus d'insertion/extraction optique des lumières appliquées en entrée et fournies en sortie par l'intermédiaire de ladite pluralité de huitièmes ports,
**caractérisée en ce que**
lesdits premiers intervalles cycliques diffèrent desdits quatrièmes intervalles cycliques et lesdits deuxièmes intervalles cycliques diffèrent desdits troisièmes intervalles cycliques.

2. Unité de noeud optique selon la revendication 1, **caractérisée en ce qu'**elle comprend en outre :
une première unité de transmission optique (300) et une seconde unité de transmission optique (400) chacune d'entre elles transmettant la lumière dans une direction différente de l'autre et comportant
le premier dispositif optique périodique (51),
le deuxième dispositif optique périodique (52),
la section de formation de chemins de transmission optique (100)
et la section d'insertion/extraction optique (200).

3. Unité de noeud optique selon la revendication 1 ou 2, **caractérisée en ce que**, si le degré de multiplexage de ladite lumière multiplexée en longueur d'onde est k et ledit premier intervalle cyclique est p, au moins l'une des valeurs de k et p est fixée de telle sorte que k puisse être divisé par p.

4. Unité de noeud optique selon la revendication 1 ou 2, **caractérisée en ce que**, si le degré de multiplexage de ladite lumière multiplexée en longueur d'onde est k et ledit premier intervalle cyclique est p, lorsque k ne peut pas être divisé par p, au moins l'une des valeurs de k et p est fixée de telle sorte que le reste vérifie l'expression j > p/2.

5. Système de transmission optique par multiplexage de longueur d'onde comprenant l'unité de noeud optique selon les revendications 1 ou 2.

6. Procédé de séparation de longueur d'onde utilisé dans un système de transmission optique par multiplexage de longueur d'onde, comprenant :
une première étape de regroupement des lumières de longueurs d'ondes individuelles incluses dans une lumière multiplexée en longueur d'onde dans une pluralité de groupes de longueurs d'ondes en utilisant un premier démultiplexeur cyclique à un premier intervalle cyclique ;
une deuxième étape de séparation des lumières de longueur d'ondes individuelles incluses dans les groupes de longueurs d'ondes formés à la première étape en utilisant un second démultiplexeur cyclique, à un deuxième intervalle cyclique ;
une troisième étape de passage à travers une lumière de longueur d'onde arbitraire ou un groupe de longueurs d'onde à traverser,
et **caractérisée en ce que** les premier et deuxième intervalles cycliques sont différents l'un de l'autre.
